# EUROPÄISCHE PATENTSCHRIFT

(11) **EP 1 313 929 B1**
(45) Veröffentlichungstag und Bekanntmachung des Hinweises auf die Patenterteilung: **22.11.2006**
(21) Anmeldenummer: 01953657.2
(22) Anmeldetag: 25.07.2001
(51) Int. Cl.: E05D 15/06, B60J 5/06, B61D 19/00

(54) **TÜRBEFESTIGUNG**
DOOR FASTENING
FIXATION DE PORTE

(30) Priorität: 31.08.2000 AT 14942000
(43) Veröffentlichungstag der Anmeldung: 28.05.2003
(73) Patentinhaber: Siemens Transportation Systems GmbH & Co KG, 1110 Wien (AT)
(72) Erfinder: MALFENT, Thomas, A-1220 Wien (AT); KRONABETER, Martin, A-3441 Freundorf (AT)
(74) Vertreter: Matschnig, Franz
(86) Internationale Anmeldenummer: PCT/AT2001/000256
(87) Internationale Veröffentlichungsnummer: WO 2002/018735

(56) Entgegenhaltungen:
- DE-A- 2 362 224
- DE-A- 19 827 918
- GB-A- 2 166 789
- US-A- 1 768 060
- US-A- 1 798 180

## Beschreibung

Die Erfindung betrifft eine Seitenwand eines Wagenkastens eines Schienenfahrzeuges mit zumindest einer mittels einer Schiebetür verschließbaren Öffnung, wobei die Schiebetür in zumindest einer Führungsschiene verschiebbar gelagert ist, und zwischen der Führungsschiene und der Seitenwand zumindest ein sowohl mit der Seitenwand als auch der Führungsschiene verbundener Hilfsträger angeordnet ist, wobei die Führungsschiene durch den Hilfsträger im wesentlichen vollständig von der Seitenwand beabstandet ist.

Bei Wänden der eingangs genannten Art kann es infolge der im praktischen Betrieb auftretenden Belastungen zu Verformungen kommen, die aufgrund der direkten Anbindung der Führungsschiene auf diese übertragen werden können, wodurch ein einwandfreies Öffnen und Schließen der Öffnung mittels einer Abdeckung nicht mehr gewährleistet ist. Vor allem bei Schienenfahrzeugen und Schiffen kann es vorkommen, dass dadurch Türöffnungen, Ladeluken etc, die mittels einer in einer Führungsschiene gelagerten Abdeckung verschließbar sind, beispielsweise einer Schiebetür, nicht mehr mit der erforderlichen Dichtheit verschlossen werden können.

In Zusammenhang mit Schiebwänden ist beispielsweise die DE 299 22 481 U1 bekannt geworden. Darin wird eine Vorrichtung aus dem Bereich des Hausbaus zur verfahrbaren Anordnung einer Schiebetür vor einer eine Zarge aufweisenden Türöffnung mit einer Laufschiene beschrieben, in welcher Laufrollen der Schiebetür verfahrbar sind. Die Laufschiene wird von mehreren Haltern gehalten, wobei zumindest ein Teil der Halter an einem Futterbrett der Zarge zwischen Zarge und Wand befestigt sind. Aufgrund der aufwendigen Realisierung der bekannten Lösung ist diese mit sehr hohen Kosten verbunden. Vor allem ist hinsichtlich des wettbewerbsbedingten, engen Spielraums in den Produktionskosten nur der unbedingt notwendige Aufwand in der Herstellung von Schiebetüren im Fahrzeugsbau zu rechtfertigen.

Die DE 299 06 739 beschreibt eine Aufhängevorrichtung für ein verschiebbares Schließelement mit einer sich in Verschieberichtung erstreckenden Laufschiene für das Schließelement und mit einer sich entlang der Laufschiene erstreckenden Zwischenschiene für die Befestigung der Laufschiene an einem Bauwerkselement eines Hauses. Die Zwischenschiene ist dabei über einen Verbindungsträger mit dem Bauwerkselement verbunden.

Die US 4,073,034 beschreibt ein Tür-Tragsystem für Schiebetüren, insbesondere für Lifttüren, wobei an einem über die Wand hinausragenden Türrahmen ein L-förmiger Hilfsträger angeordnet ist, an dem wiederum eine Laufschiene angeordnet ist. Auch diesem Dokument lässt sich kein Hinweis darauf entnehmen, wie man bei einer Laufschiene eines Fahrzeuges die Einleitung von Deformationskräften verhindern kann, sodass ein Nachjustieren der Tür entfallen kann. Nachteilig an der bekannten Ausführungsform ist vor allem, dass ein vor der Wand angeordneter Türrahmen benötigt wird, an welchem der Hilfsträger befestigt werden kann. Da bei Fahrzeugen üblicherweise ein derartiger vor einer Fahrzeugswand angeordneter Türrahmen fehlt, eignet sich diese Ausführungsform nicht für den Fahrzeugsbau.

Die EP 0 343 351 A1 offenbart eine Schiebetüranordnung mit einer in einer Laufschiene verfahrbar angeordneten Schiebetür, insbesondere für Lifttüren, wobei die Laufschiene an einem Sockel befestigt sein kann.

Die US 1 768 060 A offenbart eine Schiebetür für eine Seitenwand eines Fahrzeuges, beispielsweise eines Schienenfahrzeuges, wobei die Schiebetür mittels Rollen an einer oberen Führungsschiene verschiebbar gelagert ist. Die Führungsschiene ist T-förmig ausgebildet, wobei der Rücken der Führungsschiene der Seitenwand zugewandt ist, sodass der freie, normal zum Rücken verlaufende Schenkel der Führungsschiene nach außen ragt und eine Abrollfläche für die Rollen der Schiebetür bildet. Die Schiebetür weist an ihrem oberen der Führungsschiene zugeordneten Endbereich ein Z-förmiges Abschlusselement auf, welches unter den Rücken der T-förmigen Führungsschiene greift, wodurch ein Wegkippen der Schiebetür von der Seitenwand verhindert werden bzw. eine Führung der Schiebetür gewährleistet werden kann. Um das bauartbedingt notwendige Z-förmige Abschlusselement zwischen der Führungsschiene und der Seitenwand anordnen zu können, muss die Führungsschiene von der Seitenwand beabstandet sein. Zu diesem Zweck ist zwischen der Führungsschiene und der Seitenwand des Schienenfahrzeuges ein als Winkelelement ausgebildeter Hilfsträger vorgesehen, der mit einem Schenkel an der Oberseite eines Längsträgers bzw. Türprofils befestigt ist, wobei ein zweiter Schenkel parallel zu einer Außenseite des Längsträgers verläuft. Die Führungsschiene ist mit dem parallel zur Außenseite verbundenen Schenkel des Hilfsträgers verbunden, ragt aber parallel zur Außenseite des längsträgers über diesen hinaus, sodass zwischen dem Längsträger und der Führungsschiene der notwendige Raum Einbauraum für das Z-förmige Abschlusselement geschaffen wird.

Die GB 2 166 789 A offenbart eine Seitenwand eines Fahrzeuges, welche eine Türöffnung aufweist, die mittels einer in einer Führungsschiene mit U-förmigen Profil verschiebbar gelagerten Schiebetür verschließbar ist. Die Führungsschiene steht dabei, in direktem Kontakt zu einem Dachlangträger bzw. zur Seitenwand.

Aufgrund der direkten Kontaktierung von Dachlangträger bzw. Seitenwand und der Führungsschiene können Deformationskräfte von der Seitenwand auf die Führungsschiene übertragen werden.

Die US 1 798 180 A beschreibt eine Schiebetür, welche an einer Führungsschiene verschiebbar gelagert ist. Die Führungsschiene liegt auf einem Vorsprung der Seitenwand auf und kann mit dieser direkt verbunden sein. In der dargestellten Variante kann die Führungsschiene zum Schutz der Ecken der Seitenwand mittels einem z-förmigen Hilfsträgers mit der Seitenwand verbunden sein. Der Hilfsträger ist hierbei mit der Oberseite eines Profils der Seitenwand verbunden.

Üblicherweise werden Probleme die in Zusammenhang mit der Verformung der Laufschiene stehen durch zeitweiliges Nachjustieren der Abdeckung und der Führungsschiene gelöst. Nachteilig an dieser Lösung ist jedoch der hohe Wartungsaufwand und die damit verbundenen hohen Kosten.

Es ist daher eine Aufgabe der Erfindung, ein Weg zu schaffen, bei welchem ein Nachjustieren der Abdeckplatteneinstellungen entfallen kann ohne die Funktionalität der verschiebbaren Abdeckplatte zu beeinträchtigen. Weiters ist es eine Aufgabe der Erfindung einen Weg zu schaffen, der es ermöglicht, dass die Führungsschiene bei auf die Seitenwand wirkenden Belastungen verformungsfrei bleibt.

Diese Aufgabe wird mit einer Seitenwand gemäß Anspruch 1 gelöst.

Es ist ein Verdienst der Erfindung, die Übertragung von Wandverformungen bzw. Deformationskräften auf die Abdeckung zu verhindern, da durch die Anordnung des Hilfsträgeres eine Einleitung dieser Belastungen in die Führungsschiene unterbunden werden kann.

Die Öffnung weist zwei seitliche Profile auf, welche an ihren oberen Endbereichen durch ein oberes Profil miteinander verbunden sind, wobei der Hilfsträger zumindest abschnittsweise mit der Führungsschiene und dem oberen Profil verbunden ist. Die Einleitung von auf die Seitenwand wirkenden Deformationskräften in die Führungsschiene lässt sich besonders gut dadurch unterbinden, dass der Hilfsträger in seinem mittleren Bereich als Winkelträger mit zumindest einem parallel zur Unterseite des oberen Profils verlaufenden Schenkel ausgebildet ist und dieser Bereich des Hilfsträgers zumindest abschnittsweise mit der Unterseite des oberen Profils verbunden ist, wobei außerhalb des Bereiches der Öffnung angeordnete Bereiche des Hilfsträgers in einem Abstand von der Seitenwand verlaufen.

Die Befestigung der zumindest einen Führungsschiene an dem Hilfsträger lässt sich dadurch verbessern, dass der Hilfsträger im wesentlichen die gleiche Länge wie die obere Führungsschiene aufweist.

In einer vorteilhaften Ausführungsform ist der Hilfsträger mit dem oberen Profil und der zumindest einen Führungsschiene verschraubt.

Aus Gründen der Gewichtsersparnis und der einfachen Herstellung ist der Hilfsträger als Aluminiumprofil ausgeführt.

Eine andere vorteilhafte Variante sieht vor, dass der Hilfsträger aus Edelstahl gefertigt ist.

Die Erfindung samt weiteren Vorteilen wird im folgenden anhand einiger nicht einschränkender Ausführungsbeispiele näher erläutert, welche in der beigefügten Zeichnung schematisch veranschaulicht sind. Es zeigen
Fig. 1 eine Seitenansicht eines Abschnittes einer Ausführungsform einer Seitenwand eines Schienenfahrzeuges;
Fig. 2 die Seitenwand aus Fig. 1 mit einem Hilfsträger;
Fig. 3 einen Schnitt entlang der Linie A-A in Fig.1 durch eine erste Variante der Erfindung;
Fig. 4 einen Schnitt entlang der Linie B-B in Fig. 1 durch eine erste Variante der Erfindung;
Fig. 5 einen Schnitt entlang der Linie A-A in Fig. 1 durch eine zweite Variante der Erfindung
und Fig. 6 einen Schnitt entlang der Linie B-B in Fig. 1 durch eine zweite Variante der Erfindung.

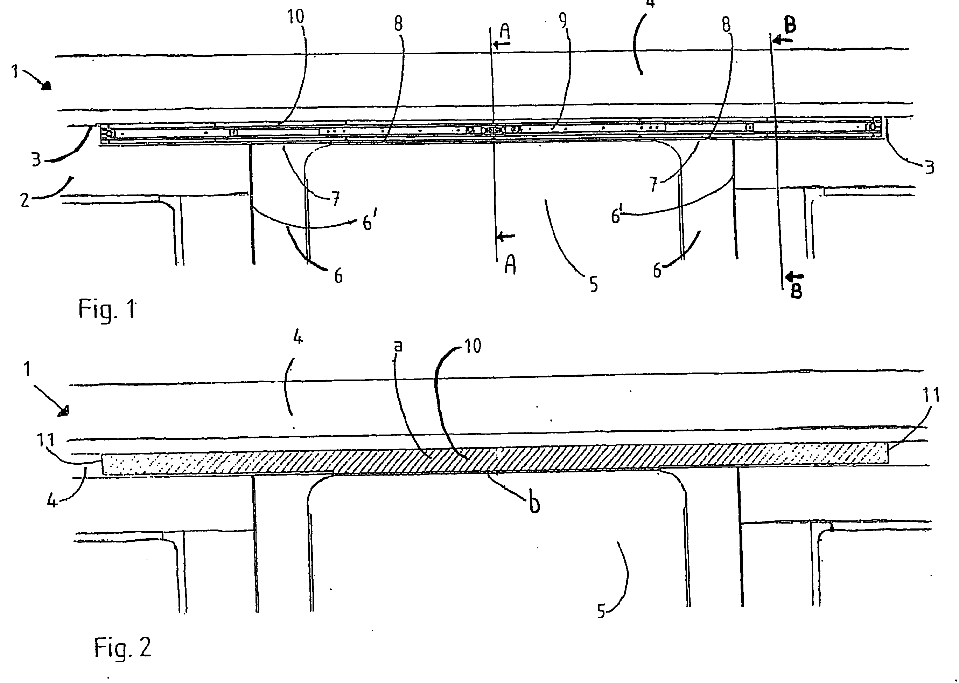

Nach Fig. 1 weist eine Seitenwand 2 eines Schienenfahrzeuges 1, an ihren oberen Enden 3 einen Dachlängsträger 4, der zur Abstützung einer Dachkonstruktion dient

Um das Zu- und Aussteigen von Passagieren bzw, das Be- und Entladen von Gütern zu ermöglichen, ist in der Seitenwand 2 eine Öffnung 5 vorgesehen, die mittels einer Abdeckung - in diesem Fall einer Schiebetür - geöffnet bzw. verschlossen werden kann, die aus darstellexischen Gründen hier nicht gezeigt ist. Die Öffnung 5 weist an ihren seitlichen Endbereichen 6' zwei normal zur Unterseite des Dachlängsträgers 4 verlaufende seitliche Profile 6 auf, deren obere Endbereiche 7 durch ein oberes Profil 8 miteinander verbunden sind.

Zur Führung der Schiebetür sind eine untere und eine obere Führungsschiene 9 vorgesehen, wobei hier nur die obere Führungsschiene 9 dargestellt ist Zur Befestigung dieser Führungsschiene 9 an der Seitenwand 2 ist ein Hilfsträger 10 vorgesehen, welcher im wesentlichen die gleiche Länge wie die Führungsschiene 9 aufweist und aus Gründen der Gewichtsersparnis als Aluminiumprofil ausgeführt sein kann. Der Hilfsträger 10 kann aber auch aus anderen Materialien, beispielsweise aus Edelstahl, hergestellt sein.

Der Hilfsträger 10 ist im wesentlichen zwischen der Seitenwand 2 und der oberen Führungsschiene 9 angeordnet Wandseitig ist der Hilfsträger 10 im Bereich der Öffnung 5 mit der Unterseite des oberen Profils 8 verbunden - vorzugsweise verschraubt -. Zu diesem Zweck weist der Hilfsträger 10 einen der Unterseite des Profils 8 zugeordneten Schenkel b auf, der in den Fig. 2, 3 und 5 dargestellt ist.

Durch diese Anordnung lässt sich eine im wesentlichen vollständige Entkopplung der im praktischen Betrieb auf die Seitenwand 2 wirkenden Deformationskräfte von der Führungsschiene 9 erzielen. In zahlreichen Versuchen hat sich nämlich herausgestellt, dass in dem Bereich des oberen Profils 8 unter Belastungen, wie sie im praktischen Betrieb auftreten können, nur vernachlässigbare Verformungen auftreten.

Prinzipiell ist der Hilfsträger 10 jedoch an jeder Stelle der Seitenwand 2, an der unter Belastungen keine Verformungen auftreten, befestigbar. Die Position dieser Stellen hängt unter anderem von der Formgebung der Wand ab und kann bei unterschiedlichen Wänden an verschiedenen Positionen liegen. Diese Stellen sind durch Berechnungen bzw. Experimente ermittelbar.

Nach Fig. 2 ist der Hilfsträger 10 im wesentlichen parallel zu dem Dachlängsträger 4 an der Außenseite des Fahrzeuges 1 angeordnet In der hier dargestellten Variante der Erfindung ist ein im Bereich der Öffnung 5, zwischen den seitlichen Profilen 6 gelegener Abschnitt des Dachlängsträgers 4 als oberes Profil 8 vorgesehen.

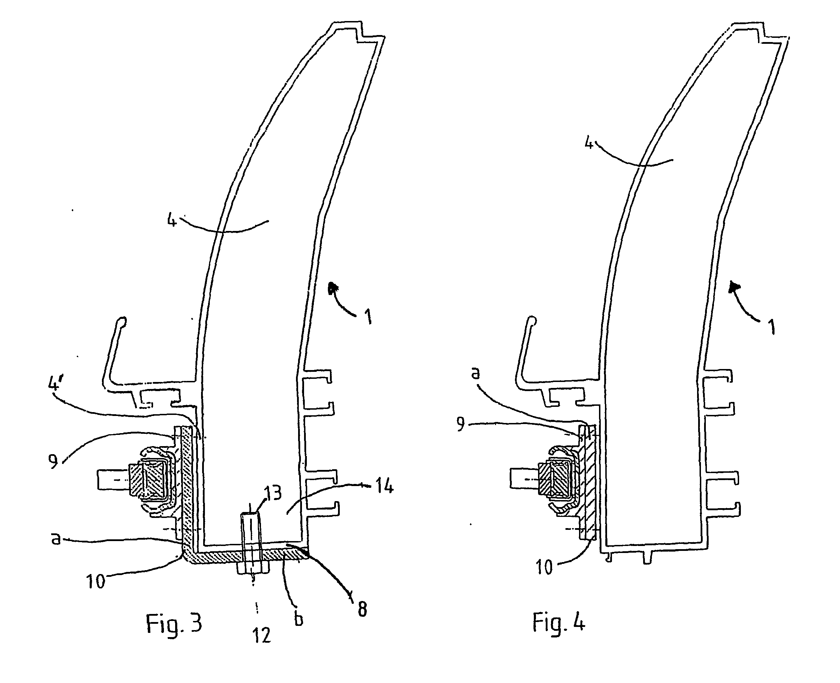

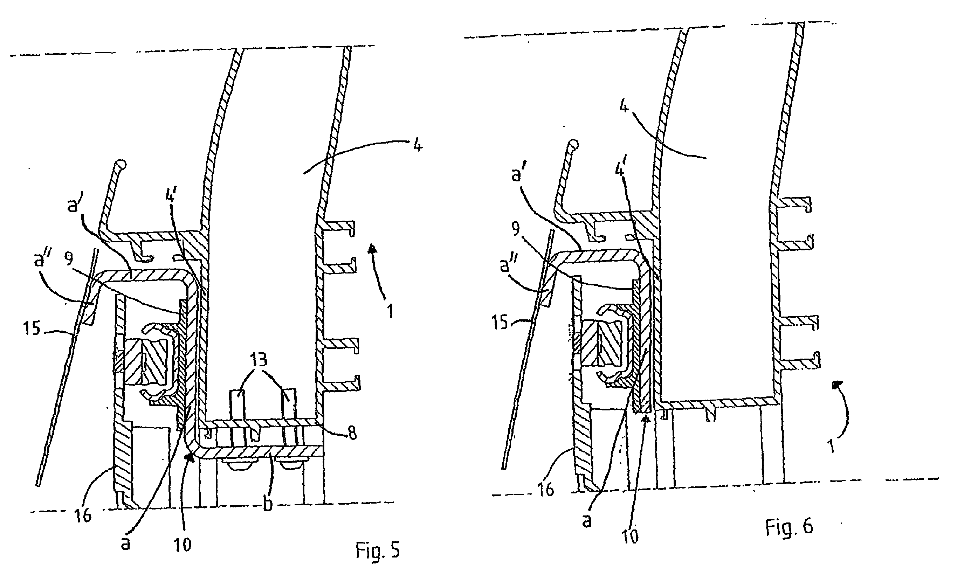

Um eine gute Verbindung mit dem Dachlängsträger 4 zu gewährleisten, weist der Hilfsträger 10, wie bereits oben erwähnt, in einem Abstand von seinen Enden 11 einen der Unterseite des Dachlängsträgers 4 zugeordneten Schenkel b auf, der in den Fig. 3 und 5 detaillierter dargestellt ist und im wesentlichen parallel zu der Unterseite des Dachlängsträgers 4 verläuft.

Die obere Führungsschiene 9, die in Fig. 1 dargestellt ist, kann bereits im Rahmen der Herstellung mit dem Hilfsträger 10 verbunden und betriebsfertig justiert werden, wobei die Führungsschiene 9 aus herstellungstechnischen Gründen mit dem Hilfsträger 10 verschraubt wird, obgleich auch andere Verbindungsarten prinzipiell möglich sind. Die Befestigung der Führungsschiene 9 erfolgt an einem eigens hierfür vorgesehenen, im wesentlichen normal zu dem der Unterseite des oberen Profils 8 zugeordneten Schenkel b verlaufenden plattenförmigen Abschnitt a des Hilfsträgers 10. Zur Montage an dem Fahrzeug 1 ist dann nur mehr der Hilfsträger 10 am Türprofil 8 zu befestigen.

Die bei der Montage der Schiebetür an dem Fahrzeug 1 anfallenden Höhentoleranzen können durch eine geeignete Anordnung und Ausführung der unteren Führungsschiene ausgeglichen werden.

Nach Fig. 3 verläuft der erste Abschnitt a des Hilfsträgers 10 in einem Abstand von dem Dachlängsträger 4 und zumindest annähernd parallel zu dessen äußerer Seitenwand 4' und der Führungsschiene 9, wobei die Länge dieses Abschnittes a parallel zur Längserstreckung des Fahrzeuges 1 im wesentlichen der Längserstreckung der Führungsschiene 9 in dieser Richtung entspricht. Der der Unterseite des Dachlängsträgers 4 zugeordnete, normal zu dem ersten Abschnitt a verlaufende, Schenkel b ist im Mittelbereich des Hilfsträgers 10 angeordnet und weist eine Längserstreckung auf, die im wesentlichen dem Abstand zwischen den beiden seitlichen Profilen 6 entspricht.

Der Schenkel b des Hilfsträgers 10 und der untere, im Bereich der Öffnung 5 gelegene Endbereich 14 des Dachlängsträgers 4, der in der hier dargestellten Ausführungsform, wie bereits oben erwähnt, als oberes Profil 8 vorgesehen ist, sind mittels Schrauben 13 miteinander verbunden. In der hier dargestellten Ausführungsform ist der Dachlängsträger 4 als Hohlträger ausgeführt. Um die Schraube 13, die in den Innenraum des Hohlträgers ragt, zu fixieren, kann dort eine Mutter vorgesehen sein. Bei einer Ausführung als Aluminiumprofil kann der Dachlängsträger 4 an den Stellen, an denen eine Schraube vorgesehen ist, eine in den Hohlraum des Trägers ragenden Fortsatz aufweisen, in welchen die Schraube 13 hineingedreht werden kann.

Einem Verschrauben des Hilfsträgers 10 mit dem Dachlängsträger 4 wird gegenüber anderen Verbindungsarten - obwohl diese prinzipiell möglich sind aus herstellungstechnischen Gründen der Vorzug gegeben.

Gemäß Fig. 4 weist der Hilfsträger 10 außerhalb des Bereiches der Öffnung 5 nur den im wesentlichen parallel zu dem Dachlängsträger 4 verlaufenden Abschnitt a auf, der in keiner unmittelbaren Verbindung mit dem Dachlängsträger 4 steht und in einem Abstand zu diesem verläuft.

Bei der Variante der Erfindung nach Fig. 5 und Fig. 6 weist der Hilfsträger 10 im Bereich der Öffnung 5 des Wagenkastens 1 ebenfalls einen der Unterseite des oberen Profils 8 zugeordneten Schenkel b auf. Parallel zu der äußeren Seitenfläche 4' des Dachlängsträgers 4 ist ein Abschnitt a vorgesehen, der, wie bereits oben erwähnt, zur Montage der Führungsschiene 9 dient, der jedoch an seinem der Dachkonstruktion zugewandten Ende in einen im wesentlichen normal zu der Wand 2 verlaufenden Abschnitt a' übergeht. Im Anschluss an diesen Abschnitt a' weist der Hilfsträger 10 einen in einem Abstand von der Wand 2 verlaufenden Abschnitt a" auf, der gegen die Wand 2 geneigt ist und an dem zum Schutz der oberen Führungsschiene 9 sowie einer Schiebtür 16 eine Schutzplatte 15 vorgesehen ist.

Die Führungsschiene 9 ist bei den oben beschriebenen Ausführungsformen der Erfindung an der Befestigungsschiene 10 befestigt, wie aus den Darstellungen deutlich zu erkennen ist Da der Bereich der Öffnung 5 ein im wesentlichen deformationsfreier Bereich ist, können bei dem hier gezeigten Ausführungsbeispiel keine Deformationskräfte auf die Führungsschiene 9 übertragen werden.

## Patentansprüche

1. Seitenwand (2) eines Wagenkastens eines Schienenfahrzeuges mit zumindest einer mittels einer Schiebetür verschließbaren Öffnung (5), wobei die Schiebetür in zumindest einer Führungsschiene (9) verschiebbar gelagert ist, und zwischen der Führungsschiene (9) und der Seitenwand zumindest ein sowohl mit der Seitenwand als auch der Führungsschiene verbundener Hilfsträger (10) angeordnet ist, wobei die Führungsschiene (9) durch den Hilfsträger (10) im wesentlichen vollständig von der Seitenwand (2) beabstandet ist, und **dadurch gekennzeichnet, dass** der Hilfsträger (10) in seinem mittleren Bereich als Winkelträger mit zumindest einem parallel zur Unterseite eines oberen Profils (8) der Öffnung (5) verlaufenden Schenkel (b) ausgebildet und dieser Schenkel (b) mit der Unterseite des oberen Profils (8) verbunden ist, wobei der Hilfsträger (10) außerhalb der Öffnung (5) einen plattenförmigen, annähernd parallel zur Führungsschiene (9) verlaufenden Abschnitt (a) zur Montage der Führungsschiene (9) aufweist und der Hilfsträger (10) nur mit der Unterseite des oberen Profils (8) verbunden ist.

2. Seitenwand nach Anspruch 1, **dadurch gekennzeichnet, dass** der Hilfsträger (10) im Wesentlichen die gleiche Länge wie die Führungsschiene (9) aufweist.

3. Seitenwand nach Anspruch 1 oder 2, **dadurch gekennzeichnet, dass** der Hilfsträger (10) mit der Führungsschiene (9) verschraubt ist.

4. Seitenwand nach einem der Ansprüche 1 bis 3, **dadurch gekennzeichnet, dass** der Hilfsträger (10) aus Edelstahl gefertigt ist.

## Claims

1. A side wall (2) of a vehicle body of a rail vehicle having at least one opening that is capable of being closed by means of a sliding door, which is mounted for displacement along at least one guide rail (9), and between said guide rail 9) and said side wall there is disposed at least one subcarrier (10) connected to both the side wall and the guide rail, said guide rail 9) being set, over substantially its entire length, at a distance from said side wall (2) by said subcarrier (10), **characterized in that** said subcarrier (10) is, in its middle region, in the form of an L-beam having at least one limb (b) which extends parallel to the underside of an upper profile (8) of said opening (5), which limb (b) is connected to the underside of said upper profile (8), the subcarrier (10) having, outside of said opening (5), a plate-like region (a) extending approximately parallel to said guide rail (9) for the purpose of installing said guide rail (9), and the subcarrier (10) is connected to only the underside of said upper profile (8).

2. A side wall as defined in claim 1, **characterized in that** the subcarrier (10) has substantially the same length as said guide rail (9).

3. A side wall as defined in claim 1 or claim 2, **characterized in that** the subcarrier (10) is screwed to said guide rail (9).

4. A side wall as defined in any one of claims 1 to 3, **characterized in that** the subcarrier (10) is made of high-grade steel.

## Revendications

1. Paroi latérale (2) d'une caisse d'un véhicule ferroviaire possédant au moins une ouverture (5) pouvant être fermée par une porte coulissante, dans lequel la porte coulissante est montée coulissante dans au moins un rail de guidage (9) et où, entre le rail de guidage (9) et la paroi latérale, est disposée au moins une poutre auxiliaire (10) reliée aussi bien à la paroi latérale qu'au rail de guidage, et où le rail de guidage (9) est sensiblement entièrement espacée de la paroi latérale (2) par la poutre auxiliaire (10), **caractérisée en ce que**, dans sa région centrale, la poutre auxiliaire (10) constitue une poutre cornière avec au moins une aile (b) s'étendant parallèlement à la face inférieure d'un profilé supérieur (8) de l'ouverture (5), cette aile (b) étant reliée à la face inférieure du profilé supérieur (8), la poutre auxiliaire (10) présentant, en dehors de l'ouverture (5), un segment (a) en forme de plaque, destiné au montage du rail de guidage (9) et s'étendant à peu près parallèlement au rail de guidage (9) et la poutre auxiliaire (10) étant reliée uniquement à la face inférieure du profilé supérieur (8).

2. Paroi latérale selon la revendication 1, **caractérisée en ce que** la poutre auxiliaire (10) présente sensiblement la même longueur que le rail de guidage (9).

3. Paroi latérale selon la revendication 1 ou 2, **caractérisée en ce que** la poutre auxiliaire (10) est vissée au rail de guidage (9).

4. Paroi latérale selon une des revendications 1 à 3, **caractérisée en ce que** la poutre auxiliaire (10) est fabriquée en acier spécial.
